# EUROPEAN PATENT SPECIFICATION

(11) **EP 0 461 685 B1**
(45) Date of publication and mention of the grant of the patent: **07.12.1994**
(21) Application number: 91200940.4
(22) Date of filing: 19.04.1991
(51) Int. Cl.: G02F 1/15, H01B 1/12

(54) **Electrochromic window, based on a polymeric polyepoxy electrolyte**
Elektrochromes Fenster mit Polyepoxy-Polymerelektrolyt
Vitrage électrochrome comprenant un électrolyte polymérique poly-époxy

(30) Priority: 13.06.1990 IT 2063290
(43) Date of publication of application: 18.12.1991
(73) Proprietor: ENIRICERCHE S.p.A., 20121 Milano (IT)
(72) Inventor: Marchese, Luca, I-20134 Milan (IT); Passerini, Stefano, I-00138 Rome (IT); Andrei, Maria, I-43042 Berceto, Parma (IT); Scrosati, Bruno, I-00186 Rome (IT); Roggero, Arnaldo, I-20097 San Donato Milanese, Milan (IT)
(74) Representative: Fusina, Gerolamo

(56) References cited:
- JOURNAL OF THE ELECTROCHEMICAL SOCIETY. vol. 136, no. 11, November 1989,MANCHESTER, NEW HAMPSHIRE US pages 3394 - 3395; S.PASSERINI & ALL: "an electrochromic window based on ....'

## Description

The present invention relates to an electrochromic window, based on a polymeric polyepoxy electrolyte, which electrochromic window is endowed with improved characteristics.

Optical devices which, following the application of an electric signal, are capable of switching from a condition of maximum transparency into the opposite condition of minimal transmittance, are known in the art. These devices are considerably interesting from the viewpoint of energy saving, in the field of building industry (smart window) and in automobile industry.

In these devices, the optical modulation can be suitably induced by electrochemical way by means of the use of electrochromic materials. By «electrochromic materials», those compounds are meant which are capable of undergoing reversible changes in colour following suitable electrochemical processes. The example is typical of tungsten oxide, WO₃, which turns from transparent into blue-coloured owing to an electrochemical intercalation process of the type: 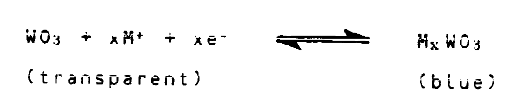
which takes place in a cell containing a transparent electrolyte capable of supplying the intercalating ion M⁺ (normally, an alcali metal ion). If the cell contains another, optically passive, material (i.e., a material which is transparent irrespective of whether the signal applied to it is an anodic or a cathodic one), or a material which is electrochromic with complementary characteristics to WO₃, a device is obtained which, when a signal (e.g. a cathodic signal) is applied to it, becomes of dark colour (due to the formation of blue-coloured MₓWO₃), whilst, when the opposite signal (i.e., an anodic signal) is applied to it, turns back into transparent (owing to the restoration of light-coloured WO₃). Therefore, by the application of a square-wave signal, the optical transparency of the device can be modulated, with said device being hence given the characteristics of an electrochromic window, with the important technological implications as above mentioned. For this known art, reference is made in particular to the paper by B. Scrosati in Chimicaoggi, June 1989, pages 41-45.

In the sector to which the present invention is directed, a continuous need exists, due to application reasons, of improving both the laminar configuration of the electrochromic devices in the solid state, and the electrochromic materials, so as to accomplish fast and reversible electrochromic processes. In co-pending Patent Application EP-A-0 454 240, to the same Applicant's name, an electrochromic window is disclosed, which has a laminar configuration and is endowed with improved performance, by means of the use of a polymeric electrolyte in the solid state based on crosslinked polyether, inserted between a layer of tungsten oxide and a layer of nickel oxide, with said layers being deposited on a glass support made conductive by films of indium and tin oxides. A similar window is disclosed in the article by S. Passerini published in the Journal of the Electrochemical Society, Vol. (1989), pages 3394-5.

The present Applicant has found now, according to the instant finding, that the introduction of a polyepoxy-based, solid, polymeric electrolyte in the electrochromic window makes it possible for the performance thereof to be further improved, in particular as regards the speed of the electrochromic process.

In accordance therewith, the present invention relates to an electrochromic window comprising:
(a) a first transparent glass sheet bearing on its inner face a first layer of conductive material of tin oxide, or of tin and indium oxides, and on said first layer an electrode of tungsten trioxide WO₃;
(b) a second transparent glass sheet bearing, on its inner face, a second layer of a conductive material of tin oxide, or of tin and indium oxides, and on said second layer a counterelectrode of nickel oxide NiO_{z} , with z being comprised within the range of from 1 to 1.66, activated by intercalation of lithium metal;
   and
(c) a solid, polymeric electrolyte interposed between said electrode (a) and said counterelectrode (b),

with said polymeric electrolyte being a solid solution of an ionic lithium compound in a solid, crosslinked polyepoxy, obtainable by copolymerization of a monoepoxide having the formula: 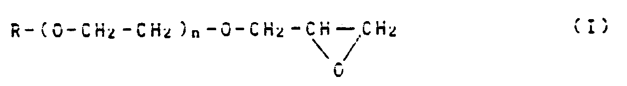
wherein:
- R: represents a methyl or ethyl radical; and
- n: is an integer comprised within the range of from 1 to 6;

with a diepoxide having the formula: 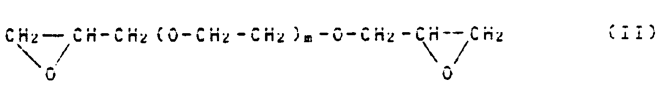
wherein:
- m: is an integer comprised within the range of from 1 to 6;

with a molar ratio of the diepoxide (II), to the monoepoxide (I) comprised within the range of from 1 : 100 to 10 : 100;
with said solid crosslinked polyepoxide having a weight average molecular weight of at least 10,000 AMU, and a glass transition temperature (Tg) comprised within the range of from -60°C to -80°C.

In the electrochromic window according to the present invention, the electrode of tungsten oxide can be prepared, according to technologies presently known in the art, by depositing, by sputtering or evaporation techniques, a thin layer of tungsten oxide (WO₃) on a glass sheet made conductive by means of a film of tin oxide, or of tin and indium oxides. The layer of tungsten oxide will typically have a thickness of the order of 300nm (3,000 Å). The conductor glasses are products available from the market.

Also the counterelectrode of nickel oxide can be prepared by deposition on conductive glass by means of techniques known in the art. However, in this initial phase , nickel oxide is not capable of operating as the counterlectrode in an electrochromic window. This condition requires an activation treatment, which essentially consists in a pre-intercalation of lithium. For that purpose, the electrode is charged to an electrochemical cell containing a solution of a lithium salt (e.g., lithium perchlorate) in an aprotic solvent (e.g., propylene carbonate) and a counterelectrode of lithium metal. Owing to the cathodic polarization, the intercalation of lithium inside nickel oxide is promoted. This process modifies the optical properties of said nickel oxide layer. In fact, owing to lithium entering inside its structure, nickel oxide becomes transparent and capable of reversibly donating and retaking said lithium, either without loosing its transparency, or turning into its coloured state with an electrochromic process complementary to the process of (WO₃).

In the electrochromic window according to the present invention, the solid polymeric electrolyte interposed between the electrode (a) and the counterelectrode (b), is constituted by a solid solution of an ionic lithium compound in a solid, crosslinked polyepoxide.

The ionic compounds of lithium can be advantageously selected from the group consisting of lithium perchlorate, borate, fluoroborate, thiocyanate, hexafluoroarsenate, trifluoroacetate and trifluoromethane-sulphonate. Lithium perchlorate is preferred.

The solid, crosslinked polyepoxide useful for the purposes according to the present invention preferably is the product of copolymerization of a diepoxide (II) and a monoepoxide (I) in which R is a methyl radical and n and m are integers comprised within the range of from 1 to 6, in a mutual molar ratio of the order of from 1 : 100 to 6 : 100, with a weight average molecular weight comprised within the range of from 10,000 to 100,000 AMU (Atomic Mass Units).

In the solid polymeric electrolyte, the atomic ratio of oxygen in said polyepoxide to lithium in the ionic compound may be comprised within the range of from 6 : 1 to 24 : 1, and preferably is of the order of 14 : 1.

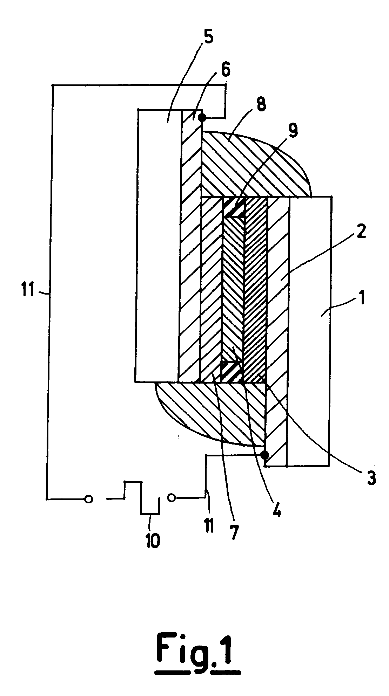

In Figure 1 of the accompanying drawing tables a typical form of practical embodiment is shown of the window according to the present invention. In particular, in this Figure:
- with (1) the glass support is indicated, which bears the layer (2) of tin and indium oxide, onto which a layer (3) of tungsten oxide (having a thickness of approximately 300nm (3,000 Å)) was deposited by sputtering;
- with (4) the solid polymeric electrolyte is indicated, which has the shape of a film having a thickness of approximately 100 microns, constituted by a solid, crosslinked polyepoxide containing lithium perchlorate. More particularly, said crosslinked polyepoxide is the product obtained by copolymerization of the diepoxide having the formula 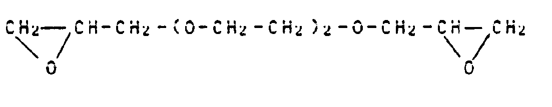 with the monoepoxide having the formula 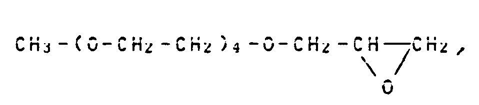 in a mutual molar ratio of 2 : 100, having a weight average molecular weight of approximately 25,000 AMU and a glass transition temperature (Tg) of -77°C. In this polyepoxide, lithium perchlorate was dissolved in such an amount, as to have an atomic ration of oxigen (contained in said polyepoxide) to lithium (contained in lithium perchlorate) of about 14 : 1;
- with (5) the glass support is indicated, which bears the layer (6) of tin and indium oxide, onto which a layer (7) of nickel oxide, activated by intercalation with lithium, was deposited, by operating in the way as described hereinabove;
- with (8) a sealant is indicated; with (9) a spacer is indicated; with (10) an external generator of square-wave voltage is indicated; and with (11) the leads are indicated, which connects the voltage source (10) to two terminals connected to the conductor layer of the electrode and the conductor layer of the counterelectrode.

The electrochromic window of Figure 1 is controlled by a square-wave signal generally variable within the range of from -2 volts to +2 volts. During the negative impulse (cathodic WO₃), the window is dark (intercalation of lithium into WO₃) and its transmittance is low, whilst during the following positive impulse (anodic WO₃), the window turns back into transparent (de-intercalation of lithium from WO₃), and transmittance is high. This behaviour, which can be repeated a very large number of times, is bound to the following process:

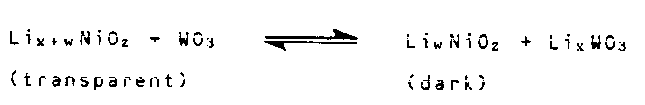

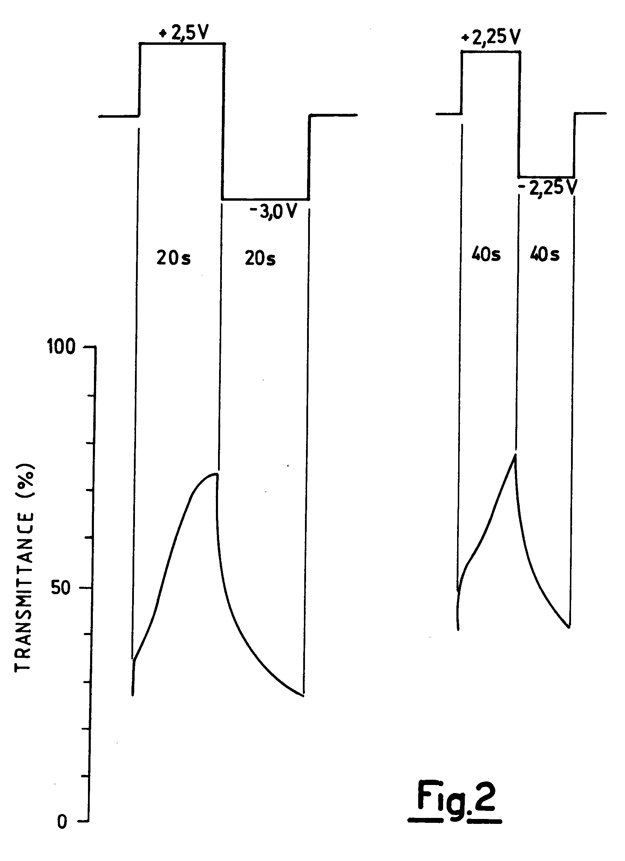

This behaviour is schematically shown in Figure 2 of the accompanying drawing tables. The time interval necessary for the electrochromic processes (i.e., the cathodic and anodic processes) to take place up to completeness is of the order of tens of seconds. This time varies with varying values of the signal which controls the cell. In case of a square wave of from +2.5 volts to -3 volts, the change in transmittance between the minimum and the maximum values thereof, and vice-versa, is obtained within a time of approximately 20 seconds.

## Claims

1. Electrochromic window comprising:
(a) a first transparent glass sheet (1) bearing on its inner face a first layer (2) of conductive material of tin oxide, or tin and indium oxides, and on said first layer an electrode (3) of tungsten trioxide WO₃;
(b) a second transparent glass sheet (5) bearing, on its inner face, a second layer (6) of a conductive material of tin oxide, or of tin and indium oxides, and on said second layer a counterelectrode (7) of nickel oxide NiO_{z}, with z comprised within the range of from 1 to 1.66, activated by electrochemical intercalation of lithium; and
(c) a solid, polymeric electrolyte (4) interposed between said electrode (a) and said counterelectrode (b),
characterized in that said polymeric electrolyte is a solid solution of an ionic lithium compound in a solid, crosslinked polyepoxide, obtainable by copolymerization of a monoepoxide having the formula: 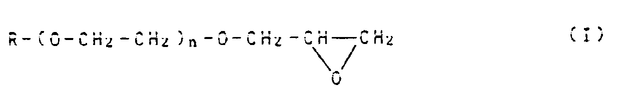 wherein:
R represents a methyl or ethyl radical; and
n is an integer comprised within the range of from 1 to 6; with a diepoxide having the formula: 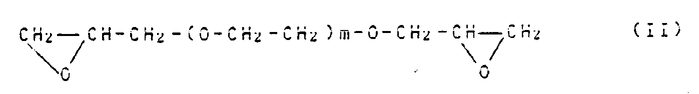 wherein:
m is an integer comprised within the range of from 1 to 6;
with a molar ratio of the diepoxide (II) to the monoepoxide (I) comprised within the range of from 1 : 100 to 10 : 100;
with said solid crosslinked polyepoxy having a weight average molecular weight of at least 10,000 AMU, and a glass transition temperature (Tg) comprised within the range of from -60°C to -80°C.

2. Electrochromic window according to claim 1, characterized in that the electrode of tungsten trioxide is obtainable by depositing, by sputtering or by evaporation, a layer of about 300 nm (3,000 Å) of tungsten trioxide on the first conductive layer.

3. Electrochromic window according to claim 1, characterized in that the counterelectrode of nickel oxide is obtainable by depositing nickel oxide onto the second conductive layer, with a following activation treatment by electrochemical intercalation of lithium.

4. Electrochromic window according to claim 1, characterized in that the ionic compounds of lithium are selected from among lithium perchlorate, borate, fluoroborate, thiocyanate, hexafluoroarsenate, trifluoroacetate and trifluoromethane-sulphonate.

5. Electrochromic window according to claim 4, characterized in that the ionic compound of lithium is lithium perchlorate.

6. Electrochromic window according to claim 1, characterized in that the solid, crosslinked polyepoxy is the product of copolymerization of a diepoxide (II) and a monoepoxide (I), in which R is the methyl radical, with their mutual molar ratio being comprised within the range of from 1 : 100 to 6 : 100, with a weight average molecular weight comprised within the range of from 10,000 to 100,000 AMU.

7. Electrochromic window according to claim 1, characterized in that in the solid, polymeric electrolyte the atomic ratio of oxygen of said polyepoxide to lithium of said ionic compound is comprised within the range of from 6 : 1 to 24 : 1, and preferably is of the order of 14 : 1.

8. Electrochromic window according to claim 1, characterized in that it furthermore comprises a source of square-wave voltage and leads which connect said voltage source to two terminals respectively connected to the two conductive layers of the electrode and of the counterelectrode.

## Patentansprüche

1. Electrochromes Fenster, aufweisend:
(a) eine erste transparente Glasscheibe (1), die an ihrer inneren Fläche eine erste Schicht (2) aus leitendem Material aus Zinnoxid oder Zinn- oder Indiumoxiden trägt, an der sich eine Elektrode (3) aus Wolframtrioxid WO₃ befindet;
(b) eine zweite transparente Glasscheibe (5), welche an ihrer inneren Fläche eine zweite Schicht (6) aus leitendem Material aus Zinnoxid oder aus Zinn- und Indiumoxiden trägt und an der zweiten Schicht eine Gegenelektrode (7) aus Nickeloxid Nio_{z} aufweist, wobei z innerhalb des Bereiches von 1 bis 1,66 liegt, wobei diese durch elektrochemische Einlagerung von Lithium aktiviert ist, und
(c) einen festen, polymeren Elektrolyten (4), der zwischen die Elektrode (a) und die Gegenelektrode (b) zwischengesetzt ist,
dadurch gekennzeichnet, daß der polymere Elektrolyt eine feste Lösung einer ionischen Lithium-zusammensetzung in einem festen, vernetzten Polyepoxid ist, welches durch Kopolymerisation eines Monoepoxids erhältlich ist, der die Formel aufweist: 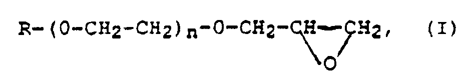 wobei R einen Methyl- oder Ethylradikal darstellt und n eine ganze ganze Zahl innerhalb des Bereilches von 1 bis 6 ist, wobei ein Diepoxid die Formel aufweist: 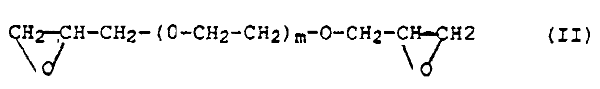 wobei m eine ganze Zahl innerhalb des Bereiches von 1 bis 6 ist;
das Molarverhältnis des Diepoxids (II) zu dem Monoepoxid (I) innerhalb des Bereiches von 1 : 100 bis 10 : 100 liegt; und
wobei das feste vernetzte Polyepoxid ein mittleres Molekulargewicht von wenigstens 100.000 AMU und eine Glasübergangstemperatur (T_{g}) innerhalb des Bereiches von -60°C bis -80°C hat.

2. Elektrochromes Fenster nach Anspruch 1, dadurch gekennzeichnet, daß die Elektrode aus Wolframtrioxid durch Niederschlagen, Aufsprühen cder durch Verdampfung einer Schicht von ungefähr 300 nm (3000 Å) aus Wolframtrioxid an der ersten leitenden Schicht erhältlich ist.

3. Elektrochromes Fenster nach Anspruch 1, dadurch gekennzeichnet, daß die Gegenelektrode aus Nickeloxid und durch Niederschlagen von Nickeloxid auf der zweiten leitenden Schicht erhältlich ist, wobei eine Aktivierungsbehandlung durch elektrochemische Einlagerung von Lithium folgt.

4. Elektrochromes Fenster nach Anspruch 1, dadurch gekennzeichnet, daß die ionischen zusammensetzungen aus Lithium aus Lithiumperchlorat, Borat, Fluorbortat, Thiocyanat, Hexafluorarsenat, Trifluoracetat und Trifluormethan-Sulfonat ausgewählt werden.

5. Elektrochromes Fenster nach Anspruch 4, dadurch gekennzeichnet, daß die ionische Zusammensetzung des Lithium Lithiumperchlorat ist.

6. Elektrochromes Fenster nach Anspruch 1, dadurch gekennzeichnet, daß das feste vernetzte Polyepoxid das Produkt der Kopolymerisation eines Diepoxids (II) und eines Monoepoxids (I) ist, wobei R ein Methylradikal ist und wobei das wechselseitige Molarverhältnis im Bereich von 1 : 100 bis 6 : 100 liegt, wobei ein mittleres Molekulargerwicht innerhalb des Bereiches von 10.000 bis 100.000 AMU liegt.

7. Elektrochromes Fenster nach Anspruch 1, dadurch gekennzeichnet, daß in dem festen polymeren Elektrolyten das Atomverhältnis des Sauerstoffs des Polyepoxids zum Lithium der ionischen Zusammensetzung innerhalb des Bereiches von 6 : 1 bis 24 : 1 und vorzugsweise in der Größenordnung von 14 : 1 liegt.

8. Elektrochromes Fenster nach Anspruch 1, dadurch gekennzeichnet, daß es weiterhin eine Rechteckspannungsquelle und Leiter aufweist, welche die Spannungsquelle mit zwei entsprechenden Anschlüssen verbindet, die mit den beiden leitenden Schichten der Elektrode und der Gegenelektrode verbunden sind.

## Revendications

1. Fenêtre électrochrome comprenant :
(a) une première feuille de verre transparente (1) portant, sur sa face intérieure, une première couche (2) d'un matériau conducteur en oxyde d'étain ou en oxyde d'étain et d'indium, et, sur ladite première couche, une électrode (3) de trioxyde de tungstène WO₃,
(b) une seconde feuille de verre transparente (5) portant, sur sa face intérieure, une seconde couche (6) d'un matériau conducteur en oxyde d'étain ou en oxyde d'étain et d'indium, et, sur ladite deuxième couche, une contre-électrode (7) d'oxyde de nickel NiO_{z}, z étant compris entre 1 et 1,66, activée par une intercalation électrochimique de lithium, et
(c) un électrolyte polymère solide (4) interposé entre ladite électrode (a) et ladite contre-électrode (b),
caractérisée en ce que ledit électrolyte polymère est une solution solide d'un composé ionique de lithium dans un polyépoxyde réticulé solide que l'on peut obtenir par copolymérisation d'un monoépoxyde de formule 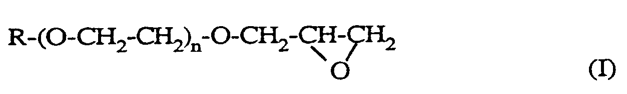 dans laquelle R représente un radical méthyle ou éthyle et n est un nombre entier compris entre 1 et 6, avec un diépoxyde de formule : 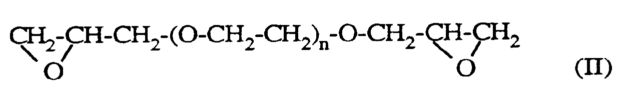 dans laquelle m est un nombre entier compris entre 1 et 6, le rapport molaire du diépoxyde (II) au monoépoxyde (I) étant compris entre 1/100 et 10/100, et ledit polyépoxyde réticulé solide ayant une masse moléculaire en poids au moins égale à 10 000 et une température de transition vitreuse (Tᵥ) comprise entre -60 °C et -80 °C.

2. Fenêtre électrochrome conforme à la revendication 1, caractérisée en ce que l'électrode d'oxyde de tungstène peut être obtenue par placage, par pulvérisation ou évaporation d'une couche d'environ 300 nm (3 000 Å) de trioxyde de tungstène sur la première couche conductrice.

3. Fenêtre électrochrome conforme à la revendication 1, caractérisée en ce que la contre-électrode d'oxyde de nickel peut être obtenue par dépôt d'oxyde de nickel sur la seconde couche conductrice, suivi d'un traitement d'activation par intercalation électrochimique de lithium.

4. Fenêtre électrochrome conforme à la revendication 1 caractérisée en ce que les composés ioniques de lithium sont choisis parmi le perchlorate, le borate, le fluoroborate, le thiocyanate, l'hexafluoroarsénate, le trifluoroacétate et le trifluorométhanesulfonate de lithium.

5. Fenêtre électrochrome conforme à la revendication 4, caractérisée en ce que le composé ionique de lithium est le perchlorate de lithium.

6. Fenêtre électrochrome conforme à la revendication 1, caractérisée en ce que le polyépoxyde réticulé solide est le produit de copolymérisation d'un diépoxyde (II) et d'un monoépoxyde (I), dans lesquels R est un radical méthyle, le rapport molaire mutuel étant compris entre 1/100 et 6/100, et la masse moléculaire moyenne en poids étant comprise entre 10 000 et 100 000.

7. Fenêtre électrochrome conforme à la revendication 1, caractérisée en ce que dans l'électrolyte polymère solide, le rapport atomique de l'oxygène dudit polyépoxyde au lithium dudit composé ionique est compris entre 6/1 et 24/1, et est de préférence de l'ordre de 14/1.

8. Fenêtre électrochrome conforme à la revendication 1, caractérisée en ce qu'elle comprend en outre une source de tension de signaux carrés et des fils qui relient ladite source de tension à deux terminaux reliés respectivement aux deux couches conductrices de l'électrode et de la contre-électrode.
